**Europäisches Patentamt**

**European Patent Office**

**Office européen des brevets**

(11) Veröffentlichungsnummer: **0 084 153 B1**

(12) **EUROPÄISCHE PATENTSCHRIFT**

(45) Veröffentlichungstag der Patentschrift:
04.12.85

(51) Int. Cl.⁴: **C 08 B 5/04**

(21) Anmeldenummer: **82111831.2**

(22) Anmeldetag: **20.12.82**

(54) Verfahren zum Herstellen von rieselfähiger Nitrocellulose mit erhöhtem Schüttgewicht.

(30) Priorität: **04.01.82 DE 3200062**

(43) Veröffentlichungstag der Anmeldung:
**27.07.83 Patentblatt 83/30**

(45) Bekanntmachung des Hinweises auf die Patenterteilung:
**04.12.85 Patentblatt 85/49**

(84) Benannte Vertragsstaaten:
**CH FR GB IT LI SE**

(56) Entgegenhaltungen:
**DE - B - 1 063 506**
**DE - B - 1 233 310**
**US - A - 2 260 343**
**US - A - 3 057 012**

(73) Patentinhaber: **WNC NITROCHEMIE GmbH,**
**D-8361 Aschau (DE)**

(72) Erfinder: **Danz, Christian, Dipl.-Ing., Weinbergstrasse 20,**
**D-8251 Lauterbach (DE)**
Erfinder: **Oversohl, Wilhelm, Dr., Dresdner Strasse 34,**
**D-5400 Koblenz-Karthause (DE)**
Erfinder: **Stockmann, Gregor, Dipl.-Ing.,**
**Rosenstrasse 54, D-8264 Waldkraiburg (DE)**

(74) Vertreter: **Lieck, Hans-Peter, Dipl.-Ing., Lieck & Betten**
**Patentanwälte Maximiliansplatz 10,**
**D-8000 München 2 (DE)**

BUNDESDRUCKEREI BERLIN

## Beschreibung

Nitrocellulosen, die durch Nitrierung von Baumwollinters und/oder Holzzellstoffen hergestellt werden, haben die bekannte Wattestruktur, d. h. die einzelnen Nitrocellulose-Fasern sind kraus, verdreht und ineinander verwoben bzw. verhakt. Diese voluminöse Struktur hat zur Folge, daß das Schüttgewicht, d. h. die durch einfaches Schütten erzielbare Dichte, der Nitrocellulose klein ist. Typische Werte liegen, je nach Nitrocellulose-Typ, zwischen 180 und 360 g/l.

Durch das geringe Schüttgewicht sind die Versandkosten der Nitrocellulose stark belastet. Man hat deshalb schon auf verschiedene Weise versucht, zu einer Erhöhung des Schüttgewichtes von Nitrocellulose zu kommen, und zwar insbesondere der lösemittelfeuchten Nitrocellulose, weil es sich bei dieser um die übliche Handelsform der Nitrocellulose handelt. So hat man bereits lösemittelfeuchte Nitrocellulose jeweils in größerer Menge in einen Hohlraum hineingestampft oder hineingepreßt und so eine Verdichtung erzielt. Dadurch wird zwar das Schüttgewicht tatsächlich erhöht, gleichzeitig aber verwirren und verhaken sich die krausen, spiralförmigen Nitrocellulosefasern noch mehr. Will man dann die Nitrocellulose, z. B. in der Lackindustrie, verwenden, muß sie erst wieder auseinandergezupft werden. Die damit verbundene Arbeit macht die Vorteile der Schüttgewichtserhöhung wieder zunichte.

Aus der DE-AS 1 063 506 und der US-PS 3 057 012 ist es bekannt, rieselfähige Nitrocellulose mit erhöhtem Schüttgewicht dadurch zu gewinnen, daß man wasser- und/oder alkoholfeuchte Nitrocellulose zu Platten oder Plättchen zusammengepreßt und diese ggf. zerkleinert oder granuliert. Der Preßvorgang soll z. B. zwischen zwei Walzen oder in einem Kalander stattfinden, wobei als Beispiel eine Spaltweite von 0,38 mm angegeben wird. Bei dem bekannten Verfahren ist ausdrücklich vorgesehen, daß die Nitrocellulose ihre fasrige Struktur verliert. Dies ist jedoch nachteilig, weil bei der späteren Weiterverarbeitung der Nitrocellulose in vielen Fällen eine fasrige Struktur notwendig, jedenfalls aber für die Weiterverarbeitung besonders günstig ist.

Dementsprechend liegt der Erfindung die Aufgabe zugrunde, ein technisch einfach durchführbares Verfahren zur Erzeugung von wasserfeuchter oder lösemittelfeuchter, fasriger Nitrocellulose anzugeben, die ein gegenüber den Werten üblicher Nitrocellulose erhöhtes Schüttgewicht hat und trotzdem wie übliche Nitrocellulose rieselfähig ist.

Diese Aufgabe ist ausgehend von einem Verfahren zum Herstellen von rieselfähiger, mindestens noch wasserfeuchter oder lösemittelfeuchter Nitrocellulose mit erhöhtem Schüttgewicht, bei welchem man die feuchte Nitrocellulose einer kurzzeitigen Druckeinwirkung zwischen zwei festen Flächen unterwirft, dadurch gelöst, daß man wasserfeuchte Nitrocellulose mit einem Wassergehalt von mindestens 10% oder wäßrige Nitrocellulose-Pülpe mit einer Nitrocellulosekonzentration von mindestens 5% als Ausgangsmaterial der kurzzeitigen Druckeinwirkung bei einer erhöhten Temperatur von mindestens 50° C unterwirft, wobei der gegenseitige Abstand der festen Flächen maximal 0,2 mm beträgt, und daß man die erhaltene, mindestens noch wasserfeuchte Nitrocellulose gegebenenfalls in an sich bekannter Weise durch Verdrängung in lösemittelfeuchte Nitrocellulose überführt.

Bei dem erfindungsgemäßen Verfahren werden die Nitrocellulosefasern gleichsam gebügelt und dadurch geglättet, so daß ihre krause, spiralförmige Stuktur nach der Druckbehandlung weitgehend aufgehoben ist. Das Ergebnis ist eine beträchtliche Erhöhung des Schüttgewichtes der Nitrocellulose. Gleichwohl hat die erhaltene Nitrocellulose eine ausgezeichnete Rieselfähigkeit; ihre Fasern sind nicht miteinander verklumpt und sie fallen wie bei in üblicher Weise hergestellter Nitrocellulose auseinander. Maßgeblich für diesen Erfolg ist der angegebene sehr geringe gegenseitige Abstand zwischen den beiden Flächen, über welche die Druckeinleitung in die Nitrocellulose bei der erfindungsgemäßen Behandlung erfolgt. Versuche haben jedenfalls gezeigt, daß bei einer Vergrößerung des Abstandes über den angegebenen Maximalwert hinaus keine nennenswerte Glättung der einzelnen Nitrocellulosefasern mehr eintritt, sondern sich eine unerwünschte, papierartig verpreßte Nitrocellulose-»Folie« ausbildet.

Besonders gute Ergebnisse werden erzielt, wenn der gegenseitige Abstand der Flächen maximal 0,05 mm beträgt.

Die erhöhte Temperatur der behandelten wäßrigen Nitrocellulose erreicht man am einfachsten durch eine Beheizung mindestens einer der beiden festen Flächen, wobei natürlich durch geeignete Ausbildung der Flächen z. B. aus Metall, sichergestellt sein muß, daß in der vergleichsweise kurzen Zeit des Kontaktes der Flächen mit der Nitrocellulose bei der Druckeinwirkung ein ausreichender Wärmetransport in die Nitrocellulose stattfindet. Es hat sich ein Wert der erhöhten Arbeitstemperatur von ca. 80° C und maximal 90° C als besonders günstig erwiesen, wobei sich die Obergrenze überwiegend nur nach Sicherheitsanforderungen richtet.

Als Ausgangsmaterial ist die wasserfeuchte Nitrocellulose für die erfindungsgemäße Behandlung dann besonders geeignet, wenn ihr Wassergehalt 28 bis 32% beträgt. Die als Ausgangsmaterial ebenfalls einsetzbare, gegenüber der wasserfeuchten Nitrocellulose aber nicht bevorzugte wäßrige Nitrocellulose-Pülpe sollte vorzugsweise eine Nitrocellulosekonzentration von 10 bis 20% haben. Wesentlich für die erfindungsgemäße Behandlung ist es, daß die Nitrocellulosefasern wasserfeucht sind, und zwar noch nach Beendigung der Druck- und Temperatureinwirkung. Natürlich sinkt bei der Behandlung der Wassergehalt der Nitrocellulose um z. B 10 bis 15%-Punkte. Keinesfalls aber soll eine vollständige Trocknung der Nitrocellulose erreicht werden. Man wird also die Dauer der Druckeinwirkung, gegebenenfalls abgestimmt auf die angewandte erhöhte Temperatur, so festlegen, daß die Nitrocellulose auch nach der Druckeinwirkung noch wasserhaltig ist. Dies ist ohne weiteres möglich, da für die Erzielung des erfindungsgemäß gewollten Glättungseffektes eine länger andauernde Druckeinwirkung in der Größenordnung von z. B. Minuten nicht erforderlich ist.

Hieran knüpft sich auch die sehr vorteilhafte Möglichkeit, das erfindungsgemäße Verfahren kontinuierlich in der Weise durchzuführen, daß man das Ausgangsmaterial in dünner Schicht zonenweise fortschreitend der Druckeinwirkung unterwirft.

Das erfindungsgemäße Verfahren kann gerade auch in der zuletzt angesprochenen kontinuierlichen Ausgestaltung technisch sehr einfach durchgeführt werden, und zwar in bevorzugter Weise unter Anwendung eines Walzenpaares, durch dessen Spalt man das Ausgangsmaterial hindurch gibt. Nicht nur läßt sich hierbei der kleine Abstand zwischen den festen Flächen durch entsprechende Einstellung der Spalt-Weite auf den geforderten Wert leicht realisieren, sondern es lassen sich auch die übrigen zweckmäßigen Parameter der erfindungsgemäßen Behandlung ohne weiteres einhalten. So hat die Dauer der Druckeinwirkung bei Anwendung eines Walzenpaares üblicher Konstruktion mit Drehzahlen zwischen 50 m$^{-1}$ und 300 min$^{-1}$ und z. B. von Drehzahlen 60 min$^{-1}$ ohne weiteres den geeigneten Wert. Die gewünschte erhöhte Arbeitstemperatur kann durch übliche Beheizung der Walzen erreicht werden.

Die Spalt-Weite des eingesetzten Walzenpaares kann auf den gewünschten — im allgemeinen möglichst niedrigen — Wert fest eingestellt sein in dem Sinne, daß sich die Spalt-Weite während der Arbeit nicht ändert. Die erzielbaren Ergebnisse dürften aber noch besser sein, wenn man mit einem Walzenpaar arbeitet, dessen Walzen mit Vorspannung soweit wie möglich aneinandergedrückt werden, wobei die eingestellte Spalt-Weite einen Höchstwert darstellt, bis zu welchem die Walzen auseinanderweichen können. Die Vorspannung wird zweckmäßigerweise durch Schwerkraft erzeugt.

Das Walzenpaar kann in üblicher Weise baulich durch zwei nebeneinander angeordnete, zwischen ihren Außenseiten den Spalt bildende Walzen realisiert sein. Es ist aber auch daran gedacht, mit einem Walzenpaar zu arbeiten, bei welchem die eine Walze mit ihrer Außenseite an der Innenseite der trommelförmigen anderen Walze abrollt.

Es ist ein besonderer Vorzug des erfindungsgemäßen Verfahrens und bestimmt entscheidend seinen praktischen Wert, daß die für die wasserfeuchte Nitrocellulose erreichte Schüttgewichtserhöhung auch bei Verdrängung des Wassers durch Lösungsmittel erhalten bleibt, so daß letzten Endes lösemittelfeuchte Nitrocellulose mit erhöhtem Schüttgewicht erzeugt werden kann. Hierzu sind bei der Verdrängung des Wassers durch Lösemittel keine besonderen Maßnahmen notwendig; vielmehr kann die Verdrängung nach jeder bekannten Methode, sei es kontinuierlich oder diskontinuierlich, erfolgen.

Die mit dem erfindungsgemäßen Verfahren erzielbare Schüttgewichtserhöhung wird belegt durch folgende

### Beispiele

1. Eine wasserfeuchte Nitrocellulose vom Typ 21 E (nach DIN 53 179) mit 12,2% Stickstoff und 28% Wasser wurde durch das Walzenpaar eines Walzwerkes gegeben, bei welchem die Spaltweite des Walzenpaares auf 0,05 mm eingestellt war und die Walzen eine Temperatur von 80° C hatten. Die derart behandelte Nitrocellulose hatte ein Schüttgewicht von 460 g/l. Ihre Rieselfähigkeit war gut. Vor der Behandlung betrug das Schüttgewicht 203 g/l.

2. Die gemäß Beispiel 1 behandelte, noch wasserfeuchte Nitrocellulose wurde im üblichen technischen Verdrängungsverfahren in diskontinuierlicher Arbeitsweise isopropanolfeucht hergestellt. Die isopropanolfeuchte Nitrocellulose hatte ein Schüttgewicht von 435 g/l.

3. Die gemäß Beispiel 1 behandelte Nitrocellulose wurde in kontinuierlicher Arbeitsweise isopropanolfeucht hergestellt. Diese isopropanolfeuchte Nitrocellulose hatte ein Schüttgewicht von 420 g/l.

4. Eine wasserfeuchte Nitrocellulose vom Typ 34 E (nach DIN 53 179 mit 12,2% Stickstoff und 24% Wasser wurde durch das Walzenpaar eines Walzwerkes gegeben, bei welchem die Spaltweite des Walzenpaares auf 0,05 mm eingestellt war und die Walzen eine Temperatur von 80° C hatten. Die so behandelte Nitrocellulose hatte ein Schüttgewicht von 630 g/l. Ihre Rieselfähigkeit war gut. Vor der Behandlung betrug das Schüttgewicht 345 g/l.

5. Die gemäß Beispiel 4 behandelte, noch wasserfeuchte Nitrocellulose wurde im üblichen technischen Verdrängungsverfahren in kontinuierlicher Arbeitsweise isopropanolfeucht hergestellt. Die isopropanolfeucht hergestellt. Die isopropanolfeuchte Nitrocellulose hatte ein Schüttgewicht von 640 g/l.

**Patentansprüche**

1. Verfahren zum Herstellen von rieselfähiger, mindestens noch wasserfeuchter oder lösemittelfeuchter Nitrocellulose mit erhöhtem Schüttgewicht, bei welchem man die feuchte Nitrocellulose einer kurzzeitigen Druckeinwirkung zwischen zwei festen Flächen unterwirft, dadurch gekennzeichnet, daß man wasserfeuchte Nitrocellulose mit einem Wassergehalt von mindestens 10% oder wäßrige Nitrocellulose-Pülpe mit einer Nitrocellulosekonzentration von mindestens 5% als Ausgangsmaterial der kurzzeitigen Druckeinwirkung bei einer erhöhten Temperatur von mindestens 50°C unterwirft, wobei der gegenseitige Abstand der festen Flächen maximal 0,2 mm beträgt, und daß man die erhaltene, mindestens noch wasserfeuchte Nitrocellulose gegebenenfalls in an sich bekannter Weise durch Verdrängung in lösemittelfeuchte Nitrocellulose überführt.

2. Verfahren nach Anspruch 1, dadurch gekennzeichnet, daß man mit einem gegenseitigen Abstand der festen Flächen von maximal 0,05 mm arbeitet.

3. Verfahren nach Anspruch 1 oder 2, dadurch gekennzeichnet, daß man bei einer Temperatur von maximal 90°C, bevorzugt bei ca. 80°C, arbeitet.

4. Verfahren nach Anspruch 1, 2 oder 3, dadurch gekennzeichnet, daß man mindestens eine der beiden festen Flächen beheizt.

5. Verfahren nach Anspruch 1 bis 4, dadurch gekennzeichnet, daß man als Ausgangsmaterial wasserfeuchte Nitrocellulose mit einem Wassergehalt von 24 bis 32% oder eine wäßrige Nitrocellulose-Pülpe mit einer Nitrocellulosekonzentration von 10 bis 20% einsetzt.

6. Verfahren nach Anspruch 1 bis 5, dadurch gekennzeichnet, daß man das Ausgangsmaterial durch den Spalt eines Walzenpaares schickt.

7. Verfahren nach Anspruch 6, dadurch gekennzeichnet, daß man mit einem Walzenpaar arbeitet, dessen Walzen mit Vorspannung aneinandergedrückt werden und nur bis zu einer eingestellten Spaltweite auseinanderweichen können.

8. Verfahren nach Anspruch 7, dadurch gekennzeichnet, daß man die Vorspannung durch Schwerkraft erzeugt.

9. Verfahren nach Anspruch 6, 7 oder 8, dadurch gekennzeichnet, daß man mit einem Walzenpaar arbeitet, bei welchem die eine Walze mit ihrer Außenseite an der Innenseite der trommelförmigen anderen Walze abrollt.

10. Verfahren nach einem der Ansprüche 6 bis 9, dadurch gekennzeichnet, daß man mit einer Drehzahl des Walzenpaares zwischen 50 min$^{-1}$ und 300 min$^{-1}$ arbeitet.

## Claims

1. A process for the production of pourable, at least still water or solvent-damp nitrocellulose with elevated apparent density, in which the damp nitrocellulose ist subjected to the influence of pressure for a short time between two solid surfaces, characterised in that water-damp nitrocellulose with a water content of at least 10%, or aqueous nitrocellulose pulp with a nitrocellulose concentration of at least 5%, is subjected as starting material to the influence of pressure for a short time, at an elevated temperature of at least 50°C, the mutual spacing of the solid surfaces being at most 0.2 mm, and in that the resulting nitrocellulose, which is at least still water-damp, is optionally converted in known manner into solventdamp nitrocellulose by displacement.

2. A process according to claim 1, characterised in that a mutual spacing between the solid surfaces of at most 0.05 mm is employed.

3. A process according to claim 1 or 2, characterised in that a temperature of at most 90°C, preferably about 80°C is employed.

4. A process according to claim 1, 2 or 3, characterised in that at least one of the two solid surfaces is heated.

5. A process according to one of claims 1 to 4, characterised in that water-damp nitrocellulose with a water content of from 24 to 32% or an aqueous nitrocellulose pulp with a nitrocellulose concentration of from 10 to 20% by weight is used as starting material.

6. A process according to on of claims 1 to 5, characterised in that the starting material is fed through the nip of a pair of rolls.

7. A process according to claim 6, characterised in that a pair of rolls is employed, the rolls of which can be urged against each other by pre-tension and can only move apart from each other up to a specific gap width.

8. A process according to claim 7, characterised in that the pre-tension is produced by gravitational force.

9. A process according to claim 6, 7 or 8, characterised in that a pair of rolls is employed, in which the outside of one roll travels on the inside of the other, drum-shaped roll.

10. A process according to one of claims 6 to 9, characterised in that a rotational speed of the pair of rolls of between 50 min$^{-1}$ and 300 min$^{-1}$ is employed.

## Revendications

1. Procédé pour la fabrication de nitrocellulose apte à l'écoulement, au moins encore mouillée d'eau ou mouillée de solvant, de masse volumique apparente accrue, dans lequel on soumet la nitrocellulose mouillée à la brève action d'une pression entre deux surfaces solides caractérisé par le fait que l'on soumet à la brève action de la pression, à une température élevée d'au moins 50°C, de la nitrocellulose mouillée d'eau ayant une teneur en eau d'au moins 10% ou de la pâte aqueuse de nitrocellulose ayant une concentration de nitrocellulose d'au moins 5%, en tant que matière de départ, l'espacement mutuel des surfaces solides étant au maximum de 0,2 mm, et que de manière en elle-même connue, par déplacement, on convertit la nitrocellulose au moins encore mouillée d'eau en nitrocellulose mouillée de solvant.

2. Procédé selon la revendication 1, caractérisé par le fait que l'on opère avec un espacement mutuel des surfaces solides de 0,05 mm au maximum.

3. Procédé selon l'une des revendications 1 et 2, caractérisé par le fait que l'on opère à une température de 90°C au maximum, de préférence à environ 80°C.

4. Procédé selon l'une des revendications 1, 2 ou 3, caractérisé par le fait que l'on chauffe au moins une des deux surfaces solides.

5. Procédé selon l'une des revendications 1 à 4, caractérisé par le fait que l'on utilise comme matière de départ de la nitrocellulose moutillée d'eau ayant une teneur en eau de 24 à 32% ou une pâte aqueuse de nitrocellulose ayant une concentration de nitrocellulose de 10 à 20%.

6. Procédé selon l'une des revendications 1 à 5, caractérisé par le fait que l'on amène la matière de départ à travers l'interstice d'une paire de cylindres.

7. Procédé selon la revendication 6, caractérisé par le fait que l'on opère avec une paire de cylindres dont les cylindres sont poussés l'un contre l'autre avec précharge et ne peuvent s'écarter l'un de l'autre que jusqu'à une largeur d'interstice réglée.

8. Procédé selon la revendication 7, caractérisé par le fait que l'on engendre la précharge par gravité.

9. Procédé selon l'une des revendications 6, 7 et 8, caractérisé par le fait que l'on opère avec une paire de cylindres dans laquelle l'un des cylindres se déroule par son côté extérieur contre le côté intérieur de l'autre cylindre, en forme de tambour.

10. Procédé selon l'une des revendications 6 à 9, caractérisé par le fait que l'on opère avec une vitesse de rotation de la paire de cylindres comprise entre 50 mn$^{-1}$ et 300 mn$^{-1}$.